(19) Europäisches Patentamt
European Patent Office
Office européen des brevets

(11) Numéro de publication: **0 184 522**
**B1**

(12) **FASCICULE DE BREVET EUROPEEN**

(45) Date de publication du fascicule du brevet: **17.02.88**

(51) Int. Cl.⁴: **B 29 C 33/38**, B 29 C 33/56

(21) Numéro de dépôt: **85420192.8**

(22) Date de dépôt: **23.10.85**

(54) **Procédé de fabrication de moules en métal à haut point de fusion par pulverisation du dit métal sur une forme en élastomère silicone chargé.**

(30) Priorité: **07.11.84 FR 8416929**

(43) Date de publication de la demande:
**11.06.86 Bulletin 86/24**

(45) Mention de la délivrance du brevet:
**17.02.88 Bulletin 88/7**

(84) Etats contractants désignés:
**AT BE CH DE FR GB IT LI LU NL SE**

(56) Documents cités:
**DE - C - 704 732**
**FR - A - 2 062 106**
**FR - A - 2 498 123**
**GB - A - 1 541 445**
**US - A - 3 161 919**
**US - A - 3 784 152**

(73) Titulaire: **RHONE-POULENC CHIMIE, 25, quai Paul Doumer, F-92408 Courbevoie Cédex (FR)**

(72) Inventeur: **Guillermond, Robert, Rue Arthur Rimbaud, F-69290 Craponne (FR)**
Inventeur: **Magnan, Elie, 27 bis, rue Magenta Résidence B, F-86000 Poitiers (FR)**

(74) Mandataire: **Seugnet, Jean Louis et al, RHONE-POULENC INTERSERVICES Service Brevets Chimie Centre de Recherches de Saint-Fons B.P. 62, F-69192 Saint-Fons Cédex (FR)**

**EP 0 184 522 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un procédé de fabrication de moules en métal par pulvérisation de métal fondu sur une forme dont la paroi, qui est destinée à recevoir le métal fondu, est en élastomère silicone. Un procédé de ce type est, par exemple, décrit dans le document FR-A-2 062 106.

Dans ce qui suit le «modèle-maître» signifie le modèle original, le mot «forme» signifie une réplique ou reproduction du modèle et le «moule» ou «coquille» signifie le moule ou une partie du moule réalisée à partir d'une forme.

Les moules métalliques servant à la fabrication en série d'objets en matières plastiques par les techniques classiques telles que la coulée par gravité, le moulage par compression, le moulage par injection, le thermoformage, etc.... sont très longs et onéreux (généralement plusieurs dizaines de milliers de francs pièce) du fait de leur production par des moyens mécaniques qui nécessitent de nombreuses heures d'usinage.

Les moules obtenus par les procédés classiques d'usinage peuvent être réalisés en acier et répondre à des cotes très précises avec des tolérances de l'ordre de quelques µm et moins. Toutefois, pour de nombreuses fabrications et secteurs d'industrie, en particulier pour les industries de la chaussure, de la bimbeloterie, certains secteurs de l'industrie automobile etc...., les tolérances de dimension sont moins contraignantes et le nombre de moules différents à réaliser est par ailleurs très important.

Il existe donc un besoin pour un procédé de fabrication de moules en métal à haut point de fusion par exemple en acier qui soit de mise en œuvre aisée et rapide, sans nécessiter d'outils d'usinage onéreux et qui permettent de réaliser de tels moules à un coût beaucoup plus faible que par les procédés classiques.

De par leurs propriétés physicochimiques intrinsèques, en particulier, de part leurs bonnes tenues thermiques, les silicones ont déjà été utilisés dans des procédés de fabrication de moules, comme matière constitutive de la forme ou de moule en vue d'abaisser le prix de revient desdits moules.

Ainsi, dans le brevet français FR-A-2 098 629 on décrit un moule en silicone permettant le moulage des métaux et alliages non ferreux fondant à une température inférieure à 700°C et pouvant être utilisés au moins 100 fois. Ces moules ne permettent donc uniquement que de réaliser des pièces moulées en métal à bas point de fusion.

Dans les brevets américains US.A 3 638 299 et US.A 3 784 152 qui présentent des descriptions similaires, on réalise un moule par pulvérisation d'un métal sur une forme. La forme peut être en matériaux très divers et on indique en passant à la colonne 1, ligne 49 de US.A 3 784 152 que la forme peut être en caoutchouc silicone sans autre précision et à la colonne 1, ligne 65 jusqu'à la colonne 2, ligne 14, on indique en outre que le métal à pulvériser peut être n'importe quel métal. Mais on précise bien que le métal préféré est le zinc ou l'aluminium dont les points de fusion sont relativement bas.

Dans la demande de brevet japonais Kokai n° 54.27394, on décrit un procédé de fabrication d'un moule en métal par réalisation d'un modèle maître en feuille d'aluminium sur lequel on réalise une forme en élastomère silicone réticulant à froid. Puis à partir de cette forme, on réalise un moule métallique par pulverisation d'une métal qui d'après l'exemple unique de cette demande est également du zinc.

Ces techniques de fabrication de moule présentent un intérêt car elles permettent de réaliser très rapidement et à faible coût des moules métalliques utilisables pour faire des pièces en matériaux thermodurcissables thermoplastiques et élastomériques par les diverses techniques connues de moulage et de formage.

Toutefois, ces moules étant réalisés en métal à bas point de fusion tel que l'aluminium, le zinc, l'étain, ou leurs alliages, même après avoir été renforcés, ne présentent pas des caractéristiques mécaniques suffisantes pour subir un grand nombre de fois les contraintes et les efforts inhérents aux techniques de moulage et de formage.

De bonnes caractéristiques mécaniques pourraient être obtenues en choisissant un autre métal ou alliage que l'aluminium, le zinc ou l'étain. Toutefois, les autres métaux ou alliages comme l'acier qui présentent de bonnes caractéristiques mécaniques présentent également un haut point de fusion, généralement supérieur à 1200°C, la plupart du temps supérieur à 1400°C pour les aciers inoxydables. Or, la pulvérisation d'acier fondu sur les formes en silicone, selon les procédés de l'art antérieur, est irréalisable car les gouttelettes d'acier fondu rebondissent sur la forme qui de plus se détériore et se déforme très fortement du fait de la température très élevée desdites gouttelettes.

La présente invention a donc précisément pour but de résoudre ce problème en proposant une forme de silicone adaptée à la fabrication rapide aisée et peu coûteuse de moules un métal à haut point de fusion par pulverisation du métal fondu sur la forme.

Dans ce qui suit, sauf indications contraires, les pourcentages et parties indiqués sont en poids.

Ce but est atteint par la présente invention qui concerne en effet un procédé de fabrication de moule en métal par pulvérisation de métal fondu sur une forme dont la paroi, qui est destinée à recevoir le métal fondu, est en élastomère silicone, caractérisé en ce que l'élastomère silicone comporte de 20 à 90%, de préférence de 40 à 70% en poids de particules d'au moins une charge réfractaire, lesdites particules ayant une dimension moyenne inférieure à 300 µm, et en ce que ledit métal est un métal à haut point de fusion, le point de fusion étant supérieur à 1000°C.

Par élastomère silicone on entend, selon l'invention, tout élastomère silicone obtenu par durcissement à chaud ou à température ambiante d'une composition organopolysiloxanique préalablement déposée avant durcissement sur un modèle-maître qui peut être réalisé classiquement en bois, en matière plastique, en plâtre, en cire, en pâte à modeler etc....

De façon à mieux épouser la surface du modèle-maître, la composition organopolysiloxanique peut se présenter avant réticulation en un élastomère silicone, de préférence sous forme d'un produit coulant enrobant la surface du mélange maître.

Les compositions organopolysiloxaniques thixotropiques sont toutefois utilisables dans la mesure où elles épousent bien la surface du mélange maître.

En fait, n'importe quelle composition organopolysiloxanique présentée en un seul ou en plusieurs emballages (mono ou multicomposants) réticulant à froid ou à chaud, avec ou sans catalyseur en un élastomère silicone est utilisable dans la mesure où la composition supporte un taux de charge compris entre 20 et 90% et peut être déposé de façon uniforme à la surface du modèle-maître et épouser fidèlement ladite surface. Ces compositions sont amplement décrites dans la littérature et notamment dans l'ouvrage de Walter Noll: «Chemistry and Technology of Silicones» Academic Press. 1968 2ème édition, pages 386 à 409.

Ces compositions organopolysiloxaniques comportent un polymère organopolysiloxanique de base qui va des fluides (au moins sept motifs siloxanes par molécule) aux gommes ne fluant pas. Comme indiqué plus haut, tout système de réticulation peut être employé pour le siloxane.

Pour les systèmes de vulcanisation à chaud (EVC élastomères vulcanisant à chaud) les agents de vulcanisation employés sont les peroxydes organiques contenant au moins un radical aryle aromatique par molécule.

De tels EVC sont par exemple décrits dans les brevets US.A 3 142 655, 3 821 140, 3 836 489 et 3 839 266.

Par cette famille d'élastomères EVC une sous-famille est plus particulièrement utilisable pour la mise en œuvre du procédé de l'invention. Il s'agit des élastomères pompables (ESP) décrits notamment dans les brevets US.A 3 791 998, US.A 4 173 560, GB.A 2 091 281 et GB.A 2 091 282.

Pour les systèmes réticulants à température ambiante (EVF élastomères vulcanisant à froid), il est possible d'utiliser une grande variété de compositions monocomposantes ou bicomposantes réticulantes par des réactions de polyaddition ou de polycondensation en présence d'un catalyseurs métallique et éventuellement d'une amine et d'un agent de réticulation qui est généralement un silane porteur de groupes hydrolysables.

Comme EVF bicomposant ou monocomposant réticulant par des réactions de polyaddition essentiellement par réaction de groupes ≡SiH portés par un silane ou un polyorganosiloxane sur des groupes hydroxycarbonés à insaturation alcéniques reliés à un atome de silicium d'un siloxane, en présence généralement d'un catalyseurs au platine, on peut citer les compositions décrites dans les brevets US.A 3 220 972, US.A 3 284 406, US.A 3 436 366, US.A 3 697 473 et US.A 4 340 709.

Comme EVF bicomposant réticulant par des réactions de polycondensation comportant généralement une huile alpha-oméga-dihydroxypolyorganosiloxanique et un agent de réticulation qui est un silane portant au moins trois groupements hydrolysables ou un polysiloxane provenant de l'hydrolyse partielle de ce silane, en présence d'un catalyseur métallique et/ou d'une amine, on peut citer les compositions décrites dans les brevets US.A 3 678 002, US.A 3 888 815, US.A 3 933 729, US.A 4 064 096 et GB.A 2 032 936.

Parmi ces compositions élastomériques on préfère tout particulièrement celles pour lesquelles l'agent de réticulation est un silicate, un alkyltrialcoxysilane ou un polysilicate et pour lequel le catalyseur métallique est un sel d'étain et en particulier les compositions comportant:

1. au moins un polymère alpha-oméga dihydroxydiorganopolysiloxanique de viscosité de 500 à 1 000 000 mPa.s à 25°C, dont les radicaux organiques sont des radicaux hydrocarbonés monovalents;

2. 20 à 90% en poids d'au moins une charge réfractaire;

3. au moins un agent de réticulation choisi parmi:
— les polyalcoxysilanes de formule:

$$(R_1O)_a\ Si\ (R_2)_{4-a} \qquad (Ia)$$

dans laquelle a est 3 ou 4, $R_1$ et $R_2$, identiques ou différents choisis parmi un radical hydrocarboné monovalent ayant jusqu'à 8 atomes de carbone, $R_1$ peut signifier en outre un radical $R_3OR_1$ dans lequel $R_3$ est un radical hydrocarboné divalent ayant jusqu'à 6 atomes de carbone et $R_1$ a la signification ci-dessus;
— les polyalcoxysiloxanes présentant au moins deux radicaux alcoxy liés à un atome de silicium par molécule dans lesquels les atomes de silicium sont reliés par des liaisons Si-O-Si, les autres valences des atomes de silicium étant satisfaites par des radicaux $R_1O$ ou $R_2$, $R_1$ et $R_2$ ayant la signification indiquée ci-dessus;

4. une quantité catalytiquement efficace d'au moins un composé catalytique de l'étain.

On utilise généralement pour 100 parties de (1) un nombre suffisant de parties de (2) pour conduire à une quantité représentant 20 à 90% en poids de l'ensemble, de 0,5 à 15 parties de (3) et de 0,005 à 1 partie, de préférence de 0,01 à 0,5 partie de (4) calculée en poids d'étain métal.

Les polymères alpha-oméga-dihydroxydiorganopolysiloxanique (1), utilisés dans les compositions de l'invention ont une viscosité de 500 à 1 million de m.Pa.s à 25°C, de préférence 800 à 500 000 m.Pa.s à 25°C, ils sont constitués principalement de motifs diorganosiloxyles mais la présence d'autres motifs tels que monoorganosiloxyles n'est pas exclue dans la proportion d'au plus 2% en nombre.

A titre de radicaux organiques, liés aux atomes de silicium de ces polymères, peuvent être cités ceux du type:

— alkyle ayant de 1 à 4 atomes de carbone comme les radicaux méthyle, éthyle, propyle;

— halogénoalcoyle ayant de 3 à 4 atomes de carbone comme les radicaux trifluoro-3,3,3 propyle, trifluoro-4,4,4 butyle;

— aryle ayant de 6 à 8 atomes de carbone comme les radicaux phényle, tolyle, xylyle;

— halogénoaryle ayant de 6 à 7 atomes de carbone comme les radicaux chlorophényle, dichlorophényle, trichlorophényle, tétrachlorophényle, trifluorométhylphényle;

— cyanoalkyle ayant de 3 à 4 atomes de carbone comme les radicaux béta-cyanoéthyle, gamma-cyanopropyle.

Les radicaux méthyles représentent au moins 60% de la totalité de ces radicaux organiques, de préférence 75%.

Diverses techniques existent pour la préparation de ces polymères (1) mais on utilise généralement celles qui ont fait leur preuve industriellement par exemple la polymérisation de diorganocyclopolysiloxanes à l'aide d'une quantité catalytique d'un agent alcalin ou acide suivie du traitement des polymérisats avec des quantités calculées d'eau (brevets français 1 134 005, 1 198 749); en outre on peut se les procurer auprès des fabricants de silicones.

Les agents de réticulation (3) utilisés, comme mentionnés plus haut, à raison d'au plus 15 parties, de préférence d'au plus 7 parties, pour 100 parties de polymère (1) servent principalement à réticuler la composition.

Les agents de réticulation (3) sont des produits bien connus décrits notamment dans les brevets français 1 330 625, 2 121 289, 2 121 631 et 2 458 572 cités comme référence.

Par radical hydrocarboné monovalent pour $R_1$ et $R_2$, on entend, plus particulièrement, des radicaux alkyle, alcényle, alcoxyalkyle, phényle, alkylphényle, phénylalkyle, éventuellement substitués par un atome d'halogène.

On peut par exemple utiliser les silanes de formule:

$CH_3Si(OCH_3)_3$
$CH_3Si(OCH_2CH_3)_3$
$CH_3Si(OCH_2CH_2OCH_3)_3$
$Si(OCH_2CH_2OCH_3)_4$
$Si(OCH_3)_4$
$Si(OCH_2CH_3)_4$
$CH_2 = CHSi(OCH_2CH_2OCH_3)_3$
$C_6H_5Si(OCH_3)_3$
$C_6H_5Si(OCH_2CH_2OCH_3)_3$
$CH_3Si(OCH_2\text{-}CHOCH_3)_3$
|
$CH_3$

Parmi les agents de réticulation (3) on préfère plus particulièrement les alkyltrialcoxysilanes, les silicates d'alkyle et les polysilicates d'alkyle dans lesquels les radicaux organiques sont des radicaux alkyles ayant de 1 à 4 atomes de carbone.

Les silicates d'alkyle peuvent être choisi parmi le silicate de méthyle, le silicate d'éthyle, le silicate d'isopropyle, le silicate de n-propyle, et les polysilicates choisis parmi les produits d'hydrolyse partielle de ces silicates; ce sont des polymères constitués d'une proportion importante de motifs de formule $(R^4O)_2SiO$ et d'une faible proportion de motifs de formule $(R^4O)_3SiO_{0,5}$, $R^4OSiO_{1,5}$ et $SiO_2$; le symbole $R^4$ représentant les radicaux méthyle, éthyle, isopropyle, n-propyle. Pour les caractériser on se base habituellement sur leur teneur en silice qui est établie par dosage du produit d'hydrolyse totale d'un échantillon.

Leurs méthodes de préparation sont bien connues et figurent en particulier dans l'ouvrage «chemistry and Technology of Silicones» de W. Noll aux pages 648 à 659. Ces polymères, afin d'être compatibles et/ou réactifs avec les autres ingrédients mis en œuvre pour la préparation des compositions de l'invention, doivent posséder la faculté de se dissoudre dans les solvants hydrocarbonés usuels tels que le toluène, le xylène, le méthylcyclohexane dans la proportion d'au moins 50 parties de polymères pour 100 parties de solvants.

On peut en particulier utiliser comme polysilicate, un silicate d'éthyle partiellement hydrolysé commercialisé sous la marque «Ethyl Silicate-40» par Union Carbide Corporation, ou un silicate de propyle partiellement hydrolysé.

Le composé (4) est un composé catalytique à l'étain utilisé ou proposé pour catalyser ce type de composition, et qui peut être en particulier un sel d'étain d'un acide mono- ou dicarboxylique. Ces carboxylates d'étain sont décrits notamment dans l'ouvrage de Noll (Chemistry and Technology of Silicones, page 337, Academic Press, 1968, 2ème édition). On peut en particulier citer le naphténate, l'octanoate, l'oléate, le butyrate, le dilaurate de dibutylétain, le diacétate de dibutylétain.

On peut également utiliser les sels d'acides monocarboxyles ramifiés sur un atome de carbone aliphatique en position alpha par rapport au groupe carboxyle et ayant au moins 8 atomes de carbone par molécule tels que décrits dans le brevet français 2 066 159 en particulier le diversatate de dibutylétain.

On peut également utiliser comme composé catalytique à l'étain le produit de réaction d'un sel d'étain, en particulier d'un dicarboxylate d'étain sur du polysilicate d'éthyle comme décrit dans le brevet US.A 3 186 963. On peut également utiliser le produit de réaction d'un dialkyldialcoxysilane sur un carboxylate d'étain comme décrit dans le brevet US.A 3 862 919.

On peut également utiliser le produit de réaction d'un silicate d'alkyle ou d'un alkyle trialcoxysilane sur le diacétate de dibutylétain comme décrit dans le brevet belge 842 305.

Comme EVF monocomposant réticulant par des réactions de polycondensation à l'humidité de l'air, éventuellement en présence d'un catalyseur métallique (Ti, Sn), cet EVF comporte généralement une huile alpa-oméga-dihydroxypolyorganosiloxanique ou une huile polyorganosiloxanique bloquée à chaque extrémité par au moins 2 groupes organiques hydrolysables tels que des groupes alcoxy ou acyloxy et un silane portant au moins trois groupements organiques hydrolysables; l'emploi de ce silane n'est pas indispensable si on utilise une huile bloquée.

Suivant la nature de ces groupements, les EVF monocomposants sont dits acides, neutres ou basiques.

Comme EVF acides on peut utiliser par exemple les compositions décrites dans les brevets US.A 3 035 016, 3 077 465, 3 133 891, 3 409 573, 3 438 930, 3 647 917 et 3 886 118.

Comme EVF neutre, on peut utiliser par exemple les compositions décrites dans les brevets US.A 3 065 194, 3 542 901, 3 689 454, 3 779 986, GB.A 2 052 540 US.A 4 417 042 et E.P.A. 69 256.

Comme EVF basique on peut par exemple utiliser les compositions décrites dans les brevets US.A 3 378 520, 3 364 160, 3 417 047, 3 464 951, 3 742 004 et 3 758 441.

On peut également utiliser selon une variante préférée les compositions coulantes monocomposantes telles que celles décrites dans les brevets US.A 3 922 246, 3 965 280 et 4 143 088, ainsi que les compositions coulantes autoaccélérées décrites dans les demandes de brevet EP.A 118 325 et EP.A 117 772.

Par fines particules de charge réfractaire, on entend des particules de dimension moyenne généralement inférieure à 300 µm, de préférence entre 1 et 100 µm et connues pour conférer aux matériaux dans lesquels ils sont introduits une bonne résistance thermique et mécanique. Comme particules réfractaires plus particulièrement utilisables pour la mise en œuvres du procédé de l'invention, on peut en particulier citer l'oxyde ferrique, l'alumine cristallisée type corindon, le sulfate de baryum, le lithopone qui est un mélange sulfure de zinc-sulfate de baryum, le talc, le talc calciné, les oxydes de terres rares, en particulier les oxydes de cérium et de lanthane, l'alumine hydratée et les terres de diatomées du type cellite, les silices de pyrogénation, les silicozirconates alcalins tel que le silicozirconate de sodium, les silices de pyrogénation traitées par un silane tel que le cyclooctaméthyltétrasiloxane, l'hexaméthyldisilazane et les chlorsilanes, la zircone, les oxydes de chrome et de titane. Ces charges réfractaires sont introduites seules ou en leurs différents mélanges possibles dans la composition élastomérique avant emploi par tout moyen approprié par exemple par des mélangeurs à deux cylindres, des malaxeurs et des pétrins.

Selon une variante du procédé de l'invention jusqu'à 30% environ, de préférence jusqu'à 20% environ, des charges réfractaires peuvent être remplacées par un produit conducteur de la chaleur choisi parmi de la poudre métallique, des fibres métalliques, des fibres minérales métallisées afin d'améliorer l'évacuation des calories à l'extérieur de la forme en silicone.

Les métaux ou alliages qui conviennent sont notamment l'aluminium, le fer, l'acier, le zirconium, le titane, le bronze, le cuivre et le laiton. Les particules constitutives des poudres doivent présenter un point de fusion supérieure à environ 700°C. Leur granulométrie est analogue à celle des charges réfractaires. Les dimensions des fibres conductrices de la chaleur sont analogues à celles des fibres réfractaires décrites ci-après.

Selon une autre variante du procédé, jusqu'à 30% des charges réfractaires peuvent être remplacées par des fibres de matériaux réfractaires de quelques dizaines de µm de diamètre et de quelques mm de longueur. Ces fibres améliorent également les propriétés mécaniques et thermiques de la forme.

Comme fibres on peut notamment utiliser les fibres de carbone, d'amiante et de verre traitées en particulier déenzymées.

Selon une autre variante du procédé de l'invention, une partie des charges réfractaires jusqu'à 20% des charges, de préférence jusqu'à 10%, peut être incorporée à l'élastomère silicone par pulvérisation, de préférence à l'état fondu, à l'aide d'un pistolet à poudre pour céramiques à haute température, ou à l'aide d'un pistolet à plasma.

Cette introduction se fait de préférence avant réticulation complète de l'élastomère silicone et au moment où cet élastomère est encore sur le modèle-maître; la pulvérisation se fait alors sur la face arrière de la forme à l'opposé de la face avant devant recevoir le métal fondu. Toutefois, si la forme silicone est suffisamment rigide, cette pulvérisation peut être effectuée après sa séparation du modèle-maître sur la face avant.

Les compositions élastomériques du commerce peuvent déjà contenir une partie du taux de charge réfractaire nécessaire. Pour pouvoir les utiliser dans le procédé de l'invention, il suffit de compléter le taux désiré par les méthodes indiquées ci-dessus.

La composition organopolysiloxanique peut être déposée à la surface du modèle-maître suivant une couche de quelques mm d'épaisseur, par exemple de 2 à 20 mm d'épaisseur. Après réticulation la forme peut être détachée du modèle-maître. La face avant de la forme qui était en contact avec le modèle-maître est la face qui reevra ultérieurement le métal fondu pulvérisé.

Selon une variante la face arrière de la forme silicone peut être renforcée en coulant un élastomère silicone ordinaire, un métal ou un alliage métallique à bas point de fusion, ou une matière plastique thermodurcissable telle qu'une résine polyester, phénolique, ou époxy; des canaux dans lesquels circule un fluide de refroidissement (eau, air, azote, liquide etc....) pouvant être noyés dans la matière renforçante.

De tels canaux de refroidissement sont particulièrement utiles lorsqu'on souhaite effectuer plusieurs moules à la suite dans la même forme.

De préférence la face avant de la forme devant recevoir le métal fondu est dépolie légèrement par exemple par sablage à l'aide d'un pistolet à air comprimé.

La forme en silicone présente de préférence une dureté Shore A comprise entre 50 et 90.

Selon un mode de réalisation particulier, la partie centrale de la forme correspondant à la coquille à réaliser présente une dureté Shore d'au moins 50, tandis que la partie périphérique supérieure de la forme présente une dureté Shore inférieure à 30. De cette manière, les particules de métal projetées ne s'accrochent qu'à la partie centrale de la forme, rebondissant sur la partie périphérique supérieure, ce qui permet d'éviter une opération d'ébarbage de la coquille.

L'épaisseur du métal projeté peut être très faible (quelques micromètres) ou atteindre plusieurs centimètres. On peut également produire des pièces de grande taille, par exemple d'une surface dépassant un mètre carré. En plus de l'utilisation de ces coquilles comme moule, on peut les utiliser également pour la réalisation de poinçons et matrices adaptés sur des presses pour l'emboutissage de plaques métalliques, par exemple pour l'emboutissage de tôles pour la fabrication de pièces de carrosseries, notamment de carrosseries automobiles et également d'électrodes pour électroérosion.

Ces poinçons et matrices sont réalisés par renforcement des coquilles c'est à dire par remplissage de la partie arrière des coquilles par pulvérisation ou coulage de métaux fondus à bas ou à haut point de fusion ou par des matériaux composites ou stratifiés connus, tels que des fibres de verre, de carbone, de bore, noyés dans une résine thermodurcissable telle qu'une résine phénolique ou époxy.

Selon un mode de réalisation souhaitable de mise en œuvre du procédé de l'invention, on effectue sur la face avant de la forme de préférence dépolie, une fine pellicule (d'une épaisseur avantageusement comprise entre quelques µm et quelques dixièmes de mm) d'un métal. Cette fine couche métallique permet d'avoir une face supérieure parfaitement lisse et donc d'améliorer la qualité de la surface de la coquille. Cette couche améliore en outre l'adhésion du métal fondu à haut point de fusion. Ce dépôt peut être effectué par différents moyens. Un premier moyen consiste à réaliser sur la forme un dépôt électrolytique au moyen de bains usuels, par exemple au moyen de bains de nickelage de cuivrage et d'argenture. Un autre moyen consiste à projetter sur la face avant de la forme de préférence préalablement sablée une fine pellicule (d'une épaisseur comprise entre quelques µm et quelques dixièmes de mm, généralement entre 5 µm et 5/10 de mm) d'au moins un métal fondu à bas point de fusion choisi parmi le bismuth, le plomb, l'étain, le zinc, l'aluminium ou leurs alliages.

L'alliage Zn/Al 85/15 est plus particulièrement préféré (85% en poids de Zinc et 15% en poids d'aluminium). Cette fine pellicule facilite ultérieurement l'éventuel chromage électrolytique de la coquille.

Par métal à haut point de fusion à projeter sur la forme, on entend des métaux ou alliages dont le point de fusion est généralement supérieur à 1000°C, le plus souvent à 1200°C, tel que les aciers courants, les aciers inoxydables fondant à environ 1400°C, ainsi que les aciers spéciaux au titane, vanadium etc....

D'autre avantages et caractéristiques de la présente invention apparaîtrons à la lecture des exemples suivants de réalisation donnés à titres illustratif, nullement limitatif, référence sera faite au dessin annoncé sur lequel:

les figures 1 à 8 illustrent les différentes étapes de la fabrication d'une forme selon l'invention;

les figures 9 à 10 illustrent la fabrication d'une demi-coquille de moule métallique selon le procédé de l'invention.

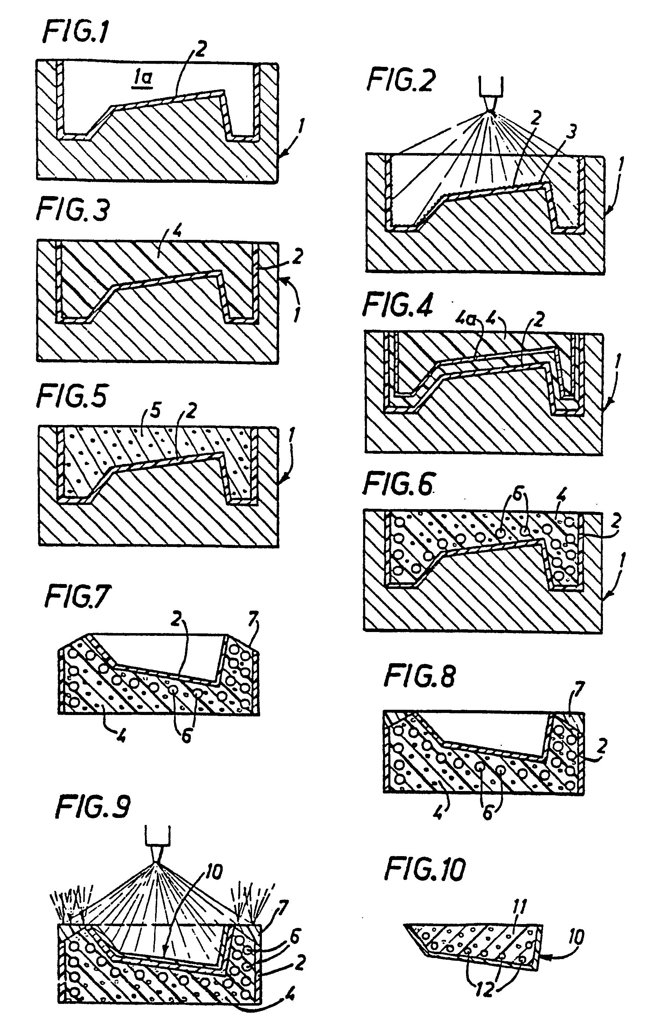

Dans un modèle-maître 1, qui peut être en bois, en matière plastique, en plâtre, en cire, en pâte à modeler, etc. dont la partie centrale 1a a la forme du moule à fabriquer, on coule à la température ambiante une composition élastomérique de silicone de type approprié sous la forme d'une couche 2 de 1 à 2 millimètres d'épaisseur (figure 1) revêtant la face avant du modèle-maître avant durcissement complet de la couche 2, on projette pendant quelques secondes (par exemple 10 secondes), à l'aide d'un pistolet JET P.M.R.® commercialisé par la Société Française SNMI Société Nouvelle de Métallisation Industries ou à l'aide d'un pistolet METCO N® pour céramiques à haute températures, une poudre réfractaire telles que celles entrant dans la composition de l'élastomère silicone. Une partie des particules projetées pénètre dans la couche 2 tandis que le reste des particules forme une mince couche 3 de quelques dizaines de micromètres d'épaisseur (figure 2). Cette brève projection qui n'est pas indispensable a pour avantage de débuller la couche 2 et d'accélérer la vulcanisation de cette couche et d'améliorer encore la tenue thermique de la forme. Le pistolet ne doit pas être placé trop près de la couche 2 pendant la projection. Une distance de l'ordre de 60 cm s'est révélée convenable ainsi qu'un angle de projection compris entre 90 et 45°. Après la projection susmentionnée on remplit la cavité résiduelle d'une matière de remplissage adéquate. Plusieurs variantes sont possibles. Une première possibilité préférée consiste à remplir la cavité d'une composition d'élastomère 4 de silicone chargée de même composition que celle ayant servi à couler la couche 2 (figure 3). Une deuxième possibilité diffère de la première en ce qu'on incorpore une couche 4a de fibres renforçantes ou de poudre fibreuse renforçante au sein de la masse 4 (figure 4). Une troisième possibilité est de remplir la cavité résiduelle de plâtre ou de béton de résine époxy ou d'une autre matière durcissable sans retrait (figure 5).

Si désiré, il est possible de ménager, dans la masse de la forme, la présence de canaux de refroidissement et des canons pour éjecteur. Il suffit pour cela de positionner dans la cavité résiduelle de la forme des tubes 6 s'étendant de part en part de ladite cavité, puis de couler la matière de remplissage. Après durcissement ou vulcanisation de cette dernière, les tubes peuvent être extraits ou laissés en place, comme on le désire (figure 6). On peut raccorder aux canaux ainsi ménagés des conduits de fluide de refroidissement. Ce dernier peut être de l'air, de l'eau, de l'huile etc.... L'eau convient bien habituellement.

La forme vulcanisée est ensuite séparée du modèle maître (figure 7) et peut être utilisée telle quelle. Toutefois, on a trouvé avantageux de réaliser le bord supérieur de la forme en un élastomère de silicone d'une dureté Shore A peu élevée (inférieure à 30) afin que les particules de métal projetées rebondissent sur ce bord et ne s'y accrochent pas, ce qui évite une opération d'ébarbage du moule. Au contraire, la dureté Shore A élevée de l'élastomère de silicone chargé formant le reste de la forme favorise l'accrochage desdites particules. Ainsi, donc, la partie supérieure 7 du bord de la forme obtenu à la fin des étapes précédentes, est biseautée, comme représenté sur la figure 7, puis reconstituée à l'aide d'une composition de silicone de faible dureté Shore A. On peut utiliser à cette fin, par exemple une composition de silicone non chargée ou faiblement chargée. On obtient finalement la forme illustrée en 8.

A l'intérieur de la forme figurée en 8 et à la surface de la couche 2 de silicone on peut projeter à l'aide d'un pistolet de pulvérisation une fine pellicule d'un alliage à bas point de fusion (par exemple Zn/Al 85/15).

Une fois réalisée, la forme en élastomère de silicone selon l'invention peut être utilisée pour produire des moules par projection à la flamme d'un métal ou alliage à haut point de fusion à l'aide d'un pistolet de métallisation usuel du genre de ceux utilisés pour protéger les métaux ferreux contre la corrosion, par exemple des pistolets METCO 12E® ou TOP-JET/2® et Z-JET/2®. Ces deux derniers étant commercialisés par SNMI. La figure 9 illustre l'emploi de la technique de projection à la flamme. Cette technique est très simple, elle consiste à projeter sur le moule des gouttelettes fondues de métal ou d'alliage à haut point de fusion. La durée de projection est fonction de l'épaisseur désirée pour l'article métallique. La coquille 10 se détache facilement de la forme en élastomère de silicone sans endommager cette dernière et un ébarbage est généralement superflu.

La coquille 10, peut être utilisé telle quelle ou devoir être soumise à d'autres étapes supplémentaires de fabrication. Lorsque la coquille est destinée à servir elle-même de moule, le moulage de matière plastique ou de matrice d'emboutissage, on peut remplir la partie arrière de la coquille 10 d'un matériau renforçant durcissable 11 (figure 10). Ce matériau renforçant peut être, par exemple, un béton de résine époxy, un mélange de résine époxy et de grenaille d'aluminium ou, un alliage Al-Si (94/6) coulé à l'état fondu par gravité à 720°C environ ou qu'on projette à la flamme. Des canaux 12 peuvent être prévus dans la matière renforçante de remplissage afin d'y faire circuler un fluide chauffant ou refroidissant par exemple dans le cas d'un moule pour matières plastiques.

*Exemples 1 à 16*

Pour réaliser la forme on utilise un EVF bi-composant catalysé à l'étain et constitué de:

— pour la première composante A:

. 100 parties d'une huile alpha-oméga-dihydroxy-polydiméthylsiloxanique de viscosité 3500 mPa.s à 25°C;
. 6 parties de silicate de propyle;
. x parties de charges réfractaires

— pour la deuxième composante B:

. 1 partie de dilaurate de dibutylétain;
. 7 parties d'un huile polydiméthylsiloxane bloquée à chacune de ses 2 extrémités par un groupement triméthylsiloxyle.

Pour préparer la composition, on incorpore les x parties de charge nécessaire pour aboutir au total désiré indiqué dans le tableau 1 ci-après, et au moment de l'emploi, on mélange à 100 parties de A, 5 parties de B.

On effectue à la suite les opérations comme indiqué ci-avant à la figure 1 avec dépôt d'une couche 2 comprise entre 2 et 3 mm d'épaisseur, puis à la figure 3 avec remplissage de la face arrière de la forme par le même élastomère que celui de la forme (2), puis à la figure 7 avec mesure de la dureté Shore A de la face avant de la forme puis réalisation d'un dépolissage de cette face avant suivi ou non éventuellement du dépôt d'une mince pellicule (2/10 de mm d'épaisseur) d'alliage Zn/Al 85/15 et à la figure 9 avec pulvérisation d'un acier inox vendu en fil par la Société METCO sous la désignation MET COLOY 2® de composition (% en poids):

| | |
|---|---|
| . Nickel | 0,5 |
| . Manganèse | 0,35 |
| . Silicium | 0,50 |
| . Phosphore | 0,02 |
| . Soufre | 0,02 |
| . Chrome | 13,5 |
| . Fer | solde |

pour réaliser une coquille 10 (fig. 9 et 10) d'environ 5 mm d'épaisseur.

Cette série d'opération est réitérée en changeant la nature et/ou le pourcentage des charges réfractaires. Les résultats sont rassemblés dans le tableau I ci-après. Le résultat des projections est apprécié par le symboles:

+ *bon:* Il y a une bonne adhérence du métal et pas d'arrachement de silicone lors du détachement de la coquille;

– *mauvais:* mauvaise adhérence du métal et/ou arrachement de silicone lors du détachement de la coquille.

Les pourcentages des charges indiqués sont bien entendu calculés par rapport au poids total de la composition organosiloxanique additionnée des charges.

*Exemple 17*

On utilise pour réaliser l'élastomère silicone un EVF bi-composant réticulant par polyaddition et préparé au moment de l'emploi par le mélange de 10 parties de composante A pour 1 partie de composante B.

— *composante A*

. 37,5 parties d'huiles alpha-oméga-bis-diméthylvinylsiloxy-polydiméthylsiloxanique, de viscosité 100.000 mPa.s à 25°C;
. 45 parties d'huile alpha-oméga-bis-diméthylvinylsiloxy-polydimèthylsiloxanique, de viscosité 3500 mPa.s à 25°C;
. 17,5 parties d'extrait sec de résine MQ en solution à 50% dans le xylène, constituée essentiellement de motifs $(CH_3)_3\ SiO_{1/2}$ (40%) et $SiO_{4/2}$ (53%) et modifiée par des motifs $(CH_3)(CH_2{=}CH)SiO$ (6%), et présentant une teneur pondérale en vinyle par rapport au poids de la résine sèche supérieure à 2,2%.

On ajoute à cette composante A, x parties de charges réfractaires, de façon à ce que la composition finale résultant du mélange 10 parties da A et de 1 partie de B comporte 19,0% de quartz et 39,4% de corindon finement broyés ainsi que 10 mg de Platine (pour 1600 g d'élastomère chargé) sous forme d'un complexe d'acide chloroplatinique et d'isopropanol comme décrit dans le brevet US.A 3 220 972 précédemment cité.

— *composante B*

. 50 parties en extrait sec de résine MQ modifiée en solution à 50% dans le xylène identique à celle utilisée dans la composante A;
. 15 parties en extrait sec de résine M'Q en solution à 50% dans le xylène presentant une mole

de motif $SiO_{4/2}$ pour 2 moles de motif $(CH_3)_2$-$HSiO_{1/2}$ présentant une teneur pondérale en hydrogène relié à un atome de silicium de 0,9%;
. 35 parties d'huile alpha-oméga-bis-diméthylvinylsiloxypolydiméthylsiloxanique de viscosité 3500 mPa.s à 25°C.

Pour préparer la composition élastomérique, on mélange donc 10 parties de A pour 1 partie de B.

On effectue les mêmes opérations qu'à l'exemple 1 avec dépôt d'une fine pellicule d'alliage Zn/Al 85/15 de 2/10 mm d'épaisseur, la dureté Shore A de la face avant de la forme est de 50 et le résultat de la projection est bon.

*Exemple 18*

On utilise pour réaliser l'élastomère silicone un EVT monocomposant coulant bien formé de:

. 100 parties d'huile alpha-oméga-dihydroxypolydiméthylsiloxanique de viscosité 3500 mPa.s à 25°C;
. 7 parties d'huile alpha-oméga-dihydroxypolyméthylphénylsiloxanique de viscosité 350 mPa.s à 25°C;
. 3 parties de méthyltriacétoxysilane et 2 × $10^{-3}$ parties de titanate de butyle.

On ajoute à cette composition x parties de charges de façon à ce que la composition comporte 12,7% de celite, 10,7% de silice de pyrogénation, 16,6% de corindon et 18,4% d'oxyde de titane.

On effectue les mêmes opérations qu'à l'exemple avec dépôt d'une fine pellicule d'alliage Zn/Al 85/15 (1/10 mm d'épaisseur), la dureté Shore A de la face avant de la forme est de 50 et le résultat de la projection est bon.

TABLEAU I

| Exemples | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Celite | 12,4 | 12,4 | 8,7 | 14,8 | 20,9 | 10,4 | 9,8 | 8,2 | 8,6 | 12,6 | 14,4 | 13,1 | 12,2 | 8,4 | 12,2 | |
| Silice de pyrogenation | | | | 6,1 | | | | | 2,0 | | | | | | | |
| Oxyde ferrique | 27,3 | 27,3 | 19,8 | 32,7 | 32,7 | 22,9 | 21,5 | 18,0 | 20,0 | 27,8 | 31,6 | 28,8 | 26,8 | 18,4 | 26,8 | 28,9 |
| Corindon | | | 45,2 | | | 34,2 | 36,2 | 48,2 | 40,0 | | | | | 47,1 | | |
| Oxyde de zirconium | | | | | | | | | | 20,0 | | | | | | |
| Talc calcine | | | | | | | | | | | 9,1 | | | | | |
| Silicozirconate de sodium | | | | | | | | | | | | 17,4 | 25,1 | | | |
| $BaSO_4$ | 28,5 | | | | | | | | | | | | | | | |
| Lithopone | | 21,5 | | | | | | | | | | | | | | |
| $TiO_2$ | | | | | | | | | | | | | | | | 18,4 |
| Total des charges (% en poids) | 68,2 | 61,2 | 73,7 | 53,6 | 53,6 | 67,5 | 67,5 | 74,4 | 70,6 | 60,4 | 55,1 | 59,3 | 64,1 | 73,9 | 39,0 | 47,3 |
| Dureté Shore A | 61 | 60 | 71 | 61 | 70 | 71 | 74 | 79 | 55 | 60 | 64 | 55 | 60 | 70 | 61 | 60 |
| Pellicule Zn/Al | non | non | non | non | non | non | non | non | oui | oui | oui | oui | oui | oui | oui | oui |
| Resultat de la projection | + | + | + | + | + | + | + | + | + | + | + | + | + | + | + | + |

**Revendications**

1. Procédé de fabrication de moule en métal par pulvérisation de métal fondu sur une forme dont la paroi, qui est destinée à recevoir le métal fondue, est en élastomère silicone, caractérisé en ce que l'élastomère silicone comporte de 20 à 90% en poids de particules d'au moins une charge réfractaire, lesdites particules ayont une dimension moyenne inférieure à 300 µm et en ce que ledit métal est un métal à haut point de fusion, le point de fusion étant supérieur à 1000°C.

2. Procédé selon la revendication 1, caractérisé en ce que l'élastomère comporte de 40 à 70% de particules de charge réfractaire.

3. Procédé selon la revendication 1 ou 2, caractérisé en ce que les charges sont choisies parmi l'oxyde ferrique, l'alumine cristallisée, l'alumine hydratée,

les terres de diatomées, la silice de pyrogénation, la silice de pyrogénation traitée par un silane, la zircone, les oxydes de chrome et de titane, le sulfate de baryum, le talc, le talc calciné, et les oxydes de terres rares et leurs mélanges.

4. Procédé selon l'une quelconque des revendications précédentes, caractérisé en ce que jusqu'à 20% des charges réfractaires sont incorporées à l'élastomère silicone par pulvérisation des charges sur l'élastomère silicone.

5. Procédé selon l'une quelconque des revendications 1 à 4, caractérisé en ce que jusqu'à 30% des charges réfractaires sont remplacées par un produit conducteur de la chaleur choisi parmi de la poudre métallique, des fibres métalliques, des fibres minérales métallisées.

6. Procédé selon l'une quelconque des revendications 1 à 5, caractérisé en ce que jusqu'à 30% des charges réfractaires sont remplacées par des fibres de matériaux réfractaires.

7. Procédé selon l'une quelconque des revendications précédentes, caractérisé en ce que la forme en élastomère silicone est obtenu par durcissement d'une composition organosiloxanique préalablement déposée sur un modèle maître, et en ce que, après durcissement, la forme est séparée du modèle maître.

8. Procédé selon l'une quelconque des revendications précédentes, caractérisé en ce que la composition organopolysiloxanique est un EVT bicomposant comportant une huile alpha-oméga-dihydroxypolyorganosiloxanique, un agent de réticulation choisi parmi un silicate d'alkyle, un alkyltrialcoxysilane et un polysilicate d'alkyle et un sel d'étain.

9. Procédé selon l'une quelconque des revendications 1 à 7, caractérisé en ce que la composition organopolysiloxanique est un EVF réticulant par des réactions de polyaddition de groupes SiH portés par un silane ou un polyorganosiloxane sur des groupes hydroxycarbonés à insaturation alcénique reliés à un atome de silicium d'un siloxane en présence d'un catalyseur au platine.

10. Procédé selon l'une quelconque des revendications 1 à 7, caractérisé en ce que la composition organopolysiloxanique est un EVF monocomposant réticulant par des réactions de polycondensation à l'humidité de l'air comportant une huile alpha-oméga-dihydroxypolyorganosiloxanique ou une huile polyorganosiloxanique bloqué à chaque extrémité par au moins 2 groupes organiques hydrolysables et un silane portant au moins trois groupements organiques hydrolysables.

11. Procédé selon l'une quelconque des revendications 8 à 10, caractérisé en ce que la composition organopolysiloxanique se présente, avant réticulation, sous forme d'un produit coulant.

12. Procédé selon l'une quelconque des revendications précédentes, caractérisé en ce que la face avant de la forme est dépolie avant projection du métal fondu à haut point de fusion.

13. Procédé selon l'une quelconque des revendications précédentes, caractérisé en ce que, avant la projection du métal fondu à haut point de fusion, on effectue un dépôt sur la face avant de la forme d'une fine pellicule d'un métal.

14. Procédé selon la revendication 13, caractérisé en ce que le dépôt est effectué par électrodéposition.

15. Procédé selon la revendication 13, caractérisé en ce que le dépôt est effectué par projection sur la face avant de la forme d'au moins un métal fondu à bas point de fusion choisi parmi le bismuth, le plomb, l'étain, le zinc, l'aluminium et leurs alliages.

16. Procédé selon la revendication 15, caractérisé en ce que ledit métal fondu à bas point de fusion est un alliage zinc-aluminium 85/15.

17. Procédé selon l'une quelconque des revendications précédentes, caractérisé en ce que la face arrière de la forme est renforcée par un matériau de renforcement avant pulvérisation du métal fondu à haut point de fusion sur la face avant de la forme.

18. Procédé selon l'une quelconque des revendications précédentes, caractérisé en ce que le métal à haut point de fusion est choisi parmi les aciers courants, les aciers inoxydables et les aciers spéciaux.

19. Procédé selon l'une quelconque des revendications précédentes, caractérisé en ce que la partie arrière de la coquille est renforcée par un matériau composite.

20. Utilisation comme moule, poinçon ou matrice d'une coquille en métal à haut point de fusion obtenue par la mise en œuvre d'un procédé conforme à l'une quelconque des revendications précédentes.

**Patentansprüche**

1. Verfahren zur Erzeugung einer Form aus Metall durch Aufspritzen von geschmolzenem Metall auf eine Form, deren Wand, die zur Aufnahme des geschmolzenen Metalls bestimmt ist, aus elastomerem Silicon besteht, dadurch gekennzeichnet, dass das elastomere Silicon 20 bis 90 Gew.-% Teilchen von wenigstens einem feuerfesten Füllstoff enthält, wobei diese Teilchen eine mittlere Dimension unterhalb 300 µm haben und dass dieses Metall ein Metall mit hohem Schmelzpunkt ist, wobei der Schmelzpunkt oberhalb 1000°C ist.

2. Verfahren gemäss Anspruch 1, dadurch gekennzeichnet, dass das Elastomere 40 bis 70% Teilchen des feuerfesten Füllstoffs enthält.

3. Verfahren gemäss Anspruch 1 oder 2, dadurch gekennzeichnet, dass die Füllstoffe ausgewählt sind unter Eisenoxid, kristallisiertem Aluminiumoxid, Aluminiumoxidhydrat, Diatomeenerden, pyrogenem Siliciumdioxid, pyrogenem Siliciumdioxid behandelt mit einem Silan, Zirkon, Chrom- und Titanoxiden, Bariumsulfat, Talk, calciniertem Talk und den Oxiden Seltener Erden und deren Gemischen.

4. Verfahren gemäss einem der vorhergehenden Ansprüche, dadurch gekennzeichnet, dass bis zu 20% der feuerfesten Füllstoffe dem elastomeren Silicon durch Spritzen der Füllstoffe auf das elastomere Silicon einverleibt sind.

5. Verfahren gemäss einem der Ansprüche 1 bis 4, dadurch gekennzeichnet, dass bis zu 30% der feuerfesten Füllstoffe durch ein wärmeleitendes Produkt, ausgewählt unter Metallpulver, Metallfasern, metallisierten mineralischen Fasern, ersetzt sind.

6. Verfahren gemäss einem der Ansprüche 1 bis 5, dadurch gekennzeichnet, dass bis zu 30% der feuerfesten Füllstoffe durch Fasern aus feuerfesten Materialien ersetzt sind.

7. Verfahren gemäss einem der vorhergehenden Ansprüche, dadurch gekennzeichnet, dass die Form aus elastomerem Silicon erhalten wird durch Härten einer Organosiloxanzusammensetzung, die vorher auf einem Urmodell abgelagert wurde, und dass nach dem Härten die Form von dem Urmodell entfernt wird.

8. Verfahren gemäss einem der vorhergehenden Ansprüche, dadurch gekennzeichnet, dass die Organopolysiloxanzusammensetzung eine KVE-Bikomponentenzusammensetzung ist, die alpha-omega-Dihydroxypolyorganosiloxanöl, ein Vernetzungsmittel, ausgewählt unter einem Alkylsilikat, einem Alkyltrialkoxysilan und einem Alkylpolysilicat, und ein Zinnsalz enthält.

9. Verfahren gemäss einem der Ansprüche 1 bis 7, dadurch gekennzeichnet, dass die Organopolysiloxanzusammensetzung ein KVE ist, das durch Polyadditionsreaktionen von SiH-Gruppen, die von einem Silan oder einem Polyorganosiloxan getragen sind, an Kohlenwasserstoffgruppen mit Alkenunsättigung, die an ein Siliciumatom eines Siloxans gebunden sind, in Gegenwart eines Platinkatalysators vernetzt.

10. Verfahren gemäss einem der Ansprüche 1 bis 7, dadurch gekennzeichnet, dass die Organopolysiloxanzusammensetzung eine KVE-Monozusammensetzung ist, die durch Polykondensationsreaktionen mit Luftfeuchtigkeit vernetzt, enthaltend ein alpha-omega-Dihydroxypolyorganosiloxanöl oder ein Polyorganosiloxanöl, das an jedem Ende durch mindestens 2 hydrolysierbare organische Gruppen blockiert ist, und ein Silan, das wenigstens drei organische hydrolysierbare Gruppen trägt.

11. Verfahren gemäss einem der Ansprüche 8 bis 10, dadurch gekennzeichnet, dass die Organopolysiloxanzusammensetzung vor dem Vernetzen in Form eines fliessenden bzw. rieselfähigen Produkts vorliegt.

12. Verfahren gemäss einem der vorhergehenden Ansprüche, dadurch gekennzeichnet, dass die Vorderseite der Form vor dem Aufspritzen des geschmolzenen Metalls mit hohem Schmelzpunkt mattiert wird.

13. Verfahren gemäss einem der vorhergehenden Ansprüche, dadurch gekennzeichnet, dass man vor dem Aufspritzen des geschmolzenen Metalls mit hohem Schmelzpunkt einen Niederschlag eines feinen Häutchens eines Metalls auf der Vorderseite der Form bewirkt.

14. Verfahren gemäss Anspruch 13, dadurch gekennzeichnet, dass der Niederschlag durch Elektro-Metallisieren bewirkt wird.

15. Verfahren gemäss Anspruch 13, dadurch gekennzeichnet, dass die Ablagerung durch Aufspritzen auf die Vorderseite der Form von wenigstens einem geschmolzenen Metall mit niedrigem Schmelzpunkt, ausgewählt unter Wismut, Blei, Zinn, Zink, Aluminium und deren Legierungen, bewirkt wird.

16. Verfahren gemäss Anspruch 15, dadurch gekennzeichnet, dass dieses geschmolzene Metall mit niedrigem Schmelzpunkt eine Legierung Zink-Aluminium 85/15 ist.

17. Verfahren gemäss einem der vorhergehenden Ansprüche, dadurch gekennzeichnet, dass die Hinterseite der Form vor dem Spritzen des geschmolzenen Metalls mit hohem Schmelzpunkt auf die Vorderseite der Form durch ein Verstärkungsmaterial verstärkt wird.

18. Verfahren gemäss einem der vorhergehenden Ansprüche, dadurch gekennzeichnet, dass das Metall mit hohem Schmelzpunkt ausgewählt ist unter den Massenstählen, den rostfreien Stählen und den Edelstählen.

19. Verfahren gemäss einem der vorhergehenden Ansprüche, dadurch gekennzeichnet, dass der hintere Teil der Dauerform durch ein Verbundmaterial verstärkt ist.

20. Verwendung einer Dauerform bzw. Kokille aus Metall mit hohem Schmelzpunkt, erhalten durch Durchführung eines Verfahrens gemäss einem der vorhergehenden Ansprüche, als Form, Stempel oder Matrize.

**Claims**

1. Process for the manufacture of a metal mould by spraying molten metal onto a form, of which the wall, which is intended to receive the molten metal, is made of a silicone elastomer, characterized in that the silicone elastomer contains from 20 to 90% by weight of particles of at least one refractory filler, the said particles having an average size less than 300 µm and in that the said metal is a metal of high melting point, the melting point being higher than 1000°C.

2. Process according to Claim 1, characterized in that the elastomer contains from 40 to 70% of particles of refractory filler.

3. Process according to Claim 1 or 2, characterized in that the fillers are chosen from amongst ferric oxide, crystallised alumina, hydrated alumina, diatomaceous earths, pyrogenic silica, pyrogenic silica treated with a silane, zirconia, chromium and titanium oxides, barium sulphate, talc, calcined talc and oxides of rare earths and mixtures thereof.

4. Process according to any one of the preceding claims, characterized in that up to 20% of the refractory fillers are incorporated into the silicone elastomer by spraying the fillers onto the silicone elastomer.

5. Process according to any one of Claims 1 to 4, characterized in that up to 30% of the refractory fillers are replaced by a heat-conducting product chosen from amongst metal powder, metal fibres and metallised inorganic fibres.

6. Process according to any one of Claims 1 to 5, characterized in that up to 30% of the refractory fillers are replaced with fibres of refractory materials.

7. Process according to any one of the preceding claims, characterized in that the form made of silicone elastomer is obtained by curing an organosiloxane composition previously deposited on a pattern, and in that, after curing, the form is separated from the pattern.

8. Process according to any one of the preceding claims, characterized in that the organopolysiloxane composition is a two-component CVE containing an alpha, omega-dihydroxypolyorganosiloxane oil, a crosslinking agent chosen from amongst an alkyl silicate, and alkyltrialkoxysilane and an alkyl polysilicate and a tin salt.

9. Porcess according to any one of Claims 1 to 7, characterized in that the organopolysiloxane composition is a CVE crosslinking by polyaddition reactions of SiH groups carried by a silane or polyorganosiloxane with hydroxycarbon groups having alkenic unsaturation, which are linked to the silicon atom of a siloxane, in the presence of a platinum catalyst.

10. Process according to any one of Claims 1 to 7, characterized in that the organopolysiloxane composition is a single component CVE crosslinking by polycondensation reactions by atmospheric moisture, containing an alpha-omega-dihydroxypolyorganosiloxane oil or a polyorganosiloxane oil blocked at each end by at least 2 hydrolysable organic groups and a silane carrying at least three hydrolysable organic groups.

11. Process according to any one of Claims 8 to 10, characterized in that before crosslinking, the organopolysiloxane composition is in the form of a flowing product.

12. Process according to any one of the preceding claims, characterized in that the front face of the form is ground before spraying the molten metal of high melting point.

13. Process according to any one of the preceding claims, characterized in that before spraying the molten metal of high melting point, a thin film of a metal is deposited on the front face.

14. Process according to Claim 13, characterized in that the deposit is applied by electrodeposition.

15. Process according to Claim 13, characterized in that the deposit is applied by spraying onto the front face of the form at least one molten metal of low melting point, chosen from amongst bismuth, lead, tin, zinc, aluminium and alloys thereof.

16. Process according to Claim 15, characterized in that the said molten metal of low melting point is an 85:15 zinc:aluminium alloy.

17. Process according to any one of the preceding claims, characterized in that the rear face of the form is reinforced with a reinforcing material before spraying the molten metal of high melting point onto the front face of the form.

18. Process according to any one of the preceding claims, characterized in that the metal of high melting point is chosen from amongst ordinary steels, stainless steels and special steels.

19. Process according to any one of the preceding claims, characterized in that the rear part of the mould is reinforced with a composite material.

20. Use as mould, punch or die of a casting made of a metal of high melting point, obtained by performing a process according to any one of the preceding Claims.

FIG.1

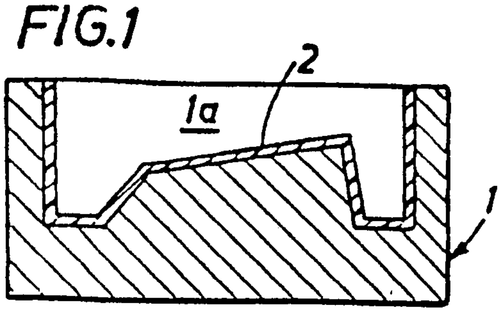


FIG.2

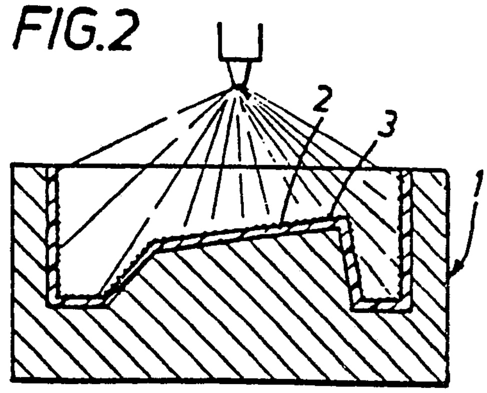


FIG.3

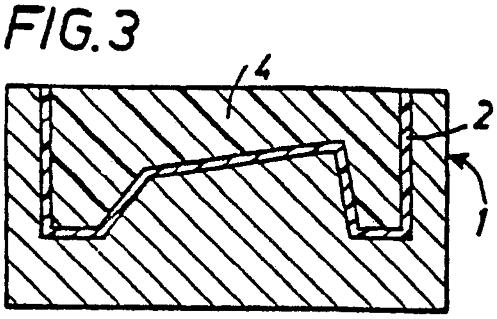


FIG.4

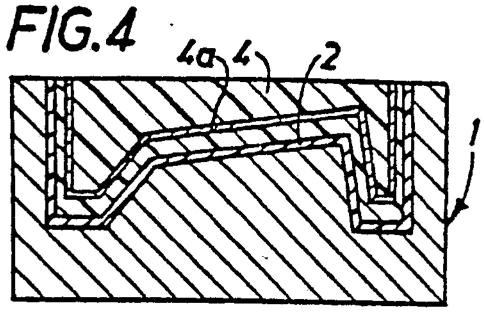


FIG.5

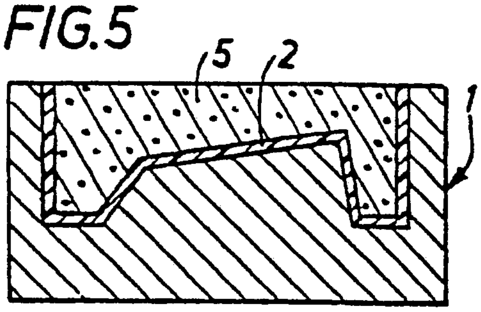


FIG.6

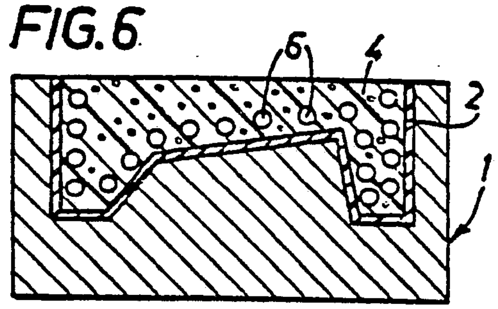


FIG.7

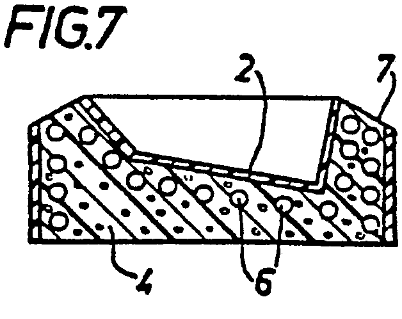


FIG.8

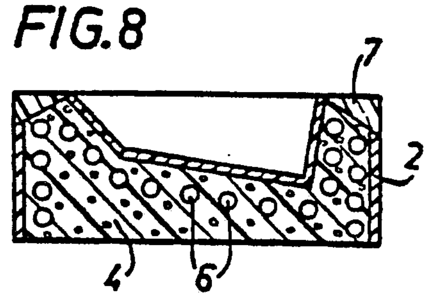


FIG.9

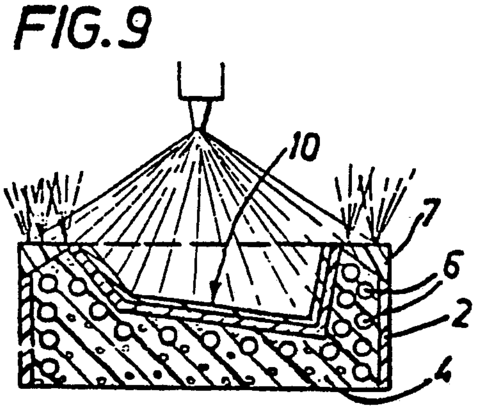


FIG.10